# EUROPEAN PATENT APPLICATION

(11) **EP 4 478 782 A1**
(43) Date of publication of application: **18.12.2024**
(21) Application number: 23749806.8
(22) Date of filing: 01.02.2023
(51) Int. Cl.: H04W 36/00

(54) **COMMUNICATION METHOD, USER DEVICE, AND BASE STATION**

(30) Priority: 07.02.2022 US 202263307248 P
(71) Applicant: Kyocera Corporation, Kyoto-shi, Kyoto 612-8501 (JP)
(72) Inventor: FUJISHIRO, Masato, Kyoto-shi, Kyoto 612-8501 (JP); CHANG, Henry, San Diego, California 92123 (US)
(74) Representative: Viering, Jentschura & Partner mbB Patent- und Rechtsanwälte
(86) International application number: PCT/JP2023/003292
(87) International publication number: WO 2023/149490

(57) **Abstract**

A communication method according to a first aspect is a communication method for communicating, by a user equipment, with a Master Cell Group (MCG) and a Secondary Cell Group (SCG), the communication method including the steps of: transmitting, by a master node configured managing the Master Cell Group (MCG), a Radio Resource Control (RRC) message to the user equipment, the radio resource control message including a target MCG configuration for performing Conditional Handover (CHO) to a target MCG and an SCG candidate configuration of each of a plurality of SCG candidates associated with the target MCG; receiving, by the user equipment, the RRC message; and selecting, by the user equipment, any SCG candidate from the plurality of SCG candidates as a target SCG when an execution condition of the CHO is satisfied.

## Description

### TECHNICAL FIELD

The present disclosure relates to a communication method, a user equipment, and a base station used in a mobile communication system.

### BACKGROUND

Technical specifications of 3GPP (Third Generation Partnership Project) that is a standardization project for mobile communication systems have formulated specifications of Conditional Handover (CHO) and Conditional PSCell Change (CPC). According to 3GPP, specifications for Conditional Primary Secondary Cell Addition (CPA: Conditional PSCell Addition) and inter-Secondary Node (inter-SN) CPC have been argued. Note that CPC and CPA will be also collectively referred to as CPAC.

### CITATION LIST

### NON-PATENT LITERATURE

NPL 1: 3GPP Technical specification "TS38.300 V16.8.0" (2021-12)

### SUMMARY

The present disclosure provides a communication method, a user equipment, and a base station that can simultaneously perform CHO and CPAC.

A communication method according to a first aspect is a communication method for communicating, by a user equipment, with a Master Cell Group (MCG) and a Secondary Cell Group (SCG), the communication method including the steps of: transmitting, by a master node managing the Master Cell Group (MCG), a Radio Resource Control (RRC) message to the user equipment, the radio resource control message including a target MCG configuration for performing Conditional Handover (CHO) to a target MCG and an SCG candidate configuration of each of a plurality of SCG candidates associated with the target MCG; receiving, by the user equipment, the RRC message; and selecting, by the user equipment, any SCG candidate from the plurality of SCG candidates as a target SCG when an execution condition of the CHO is satisfied.

A user equipment according to a second aspect is a user equipment for communicating with a Master Cell Group (MCG) and a Secondary Cell Group (SCG), the user equipment including: a receiver configured to receive, from a master node managing the Master Cell Group (MCG), a Radio Resource Control (RRC) message including a target MCG configuration for performing Conditional Handover (CHO) to a target MCG and an SCG candidate configuration of each of a plurality of SCG candidates associated with the target MCG; and a controller configured to select any SCG candidate from the plurality of SCG candidates as a target SCG when an execution condition of the CHO is satisfied.

A base station according to a third aspect is a base station for operating as a master node managing a Master Cell Group (MCG) used by a user equipment, the base station including: a transmitter configured to transmit a Radio Resource Control (RRC) message to the user equipment, the radio resource control message including a target MCG configuration for performing Conditional Handover (CHO) to a target MCG and an SCG candidate configuration of each of a plurality of SCG candidates associated with the target MCG.

### BRIEF DESCRIPTION OF THE DRAWINGS

FIG. 1 is a diagram illustrating a configuration of a mobile communication system according to an embodiment.
FIG. 2 is a diagram illustrating a configuration of a user equipment (UE) according to an embodiment.
FIG. 3 is a diagram illustrating a configuration of a gNB (base station) according to an embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram for explaining a summary of DC according to the embodiment.
FIG. 7 is a diagram for explaining CHO according to the embodiment.
FIG. 8 is a diagram for explaining CPC according to the embodiment.
FIG. 9 is a diagram for explaining CPA according to the embodiment.
FIG. 10 is a diagram for explaining an operation of simultaneously performing CHO and CPC according to the embodiment.
FIG. 11 is a diagram for explaining an operation of simultaneously performing CHO and CPA according to the embodiment.
FIG. 12 is a diagram illustrating configuration example 1 of an RRC message according to the embodiment.
FIG. 13 is a diagram illustrating configuration example 2 of the RRC message according to the embodiment.
FIG. 14 is a diagram illustrating an example of an operation flow of a UE according to the embodiment.

### DESCRIPTION OF EMBODIMENTS

A mobile communication system according to an embodiment is described with reference to the drawings. In the description of the drawings, the same or similar parts are denoted by the same or similar reference signs.

### (1) Configuration of mobile communication system

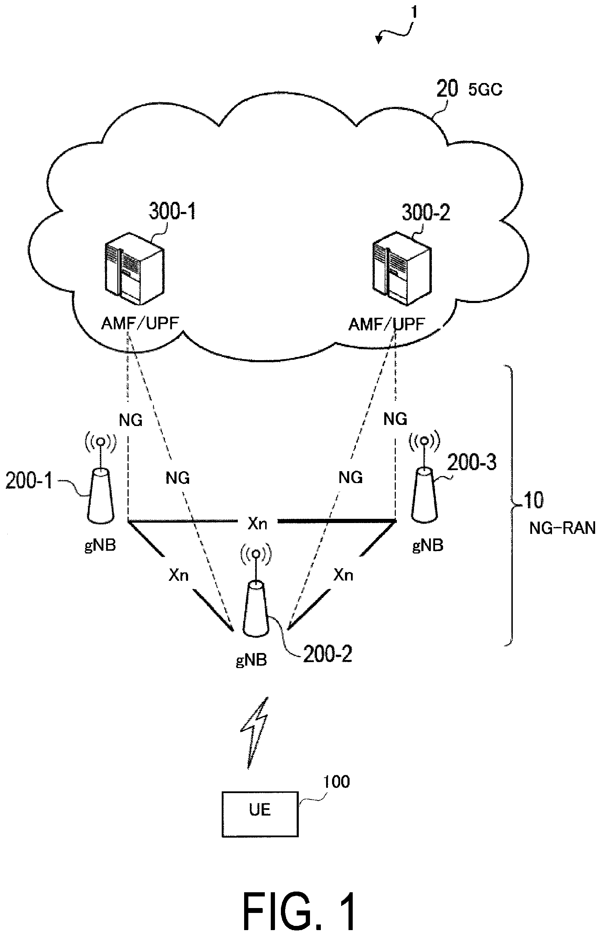

First, a configuration of a mobile communication system according to an embodiment is described. FIG. 1 is a diagram illustrating a configuration of a mobile communication system according to an embodiment. The mobile communication system 1 complies with the 5th Generation System (5GS) of the 3GPP standard. The description below takes the 5GS as an example, but a Long Term Evolution (LTE) system or a sixth generation (6G) system may be at least partially applied to the mobile communication system.

The mobile communication system 1 includes a User Equipment (UE) 100, a 5G radio access network (Next Generation Radio Access Network (NG-RAN)) 10, and a 5G Core Network (5GC) 20. The NG-RAN 10 may be hereinafter simply referred to as a RAN 10. The 5GC 20 may be simply referred to as a core network (CN) 20.

The UE 100 is a mobile wireless communication apparatus. The UE 100 may be any apparatus as long as the UE 100 is used by a user. Examples of the UE 100 include a mobile phone terminal (including a smartphone), a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter simply referred to as one "frequency").

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

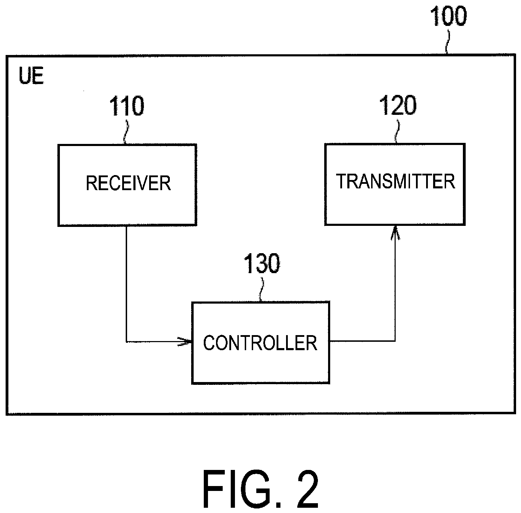

FIG. 2 is a diagram illustrating a configuration of the UE 100 (user equipment) to the embodiment. The UE 100 includes a receiver 110, a transmitter 120, and a controller 130. The receiver 110 and the transmitter 120 constitute a wireless communicator that performs wireless communication with the gNB 200.

The receiver 110 performs various types of reception under control of the controller 130. The receiver 110 includes an antenna and a reception device. The reception device converts a radio signal received through the antenna into a baseband signal (a reception signal) and outputs the resulting signal to the controller 130.

The transmitter 120 performs various types of transmission under control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various types of control and processing in the UE 100. Such processing includes processing of respective layers to be described later. The controller 130 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

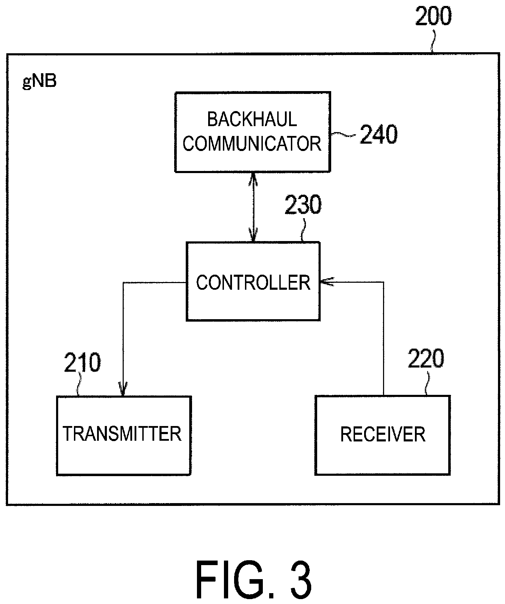

FIG. 3 is a diagram illustrating a configuration of the gNB 200 (base station) according to the embodiment. The gNB 200 includes a transmitter 210, a receiver 220, a controller 230, and a backhaul communicator 240. The transmitter 210 and the receiver 220 constitute a wireless communicator that performs wireless communication with the UE 100. The backhaul communicator 240 constitutes a network communicator that performs communication with the CN 20.

The transmitter 210 performs various types of transmission under control of the controller 230. The transmitter 210 includes an antenna and a transmission device. The transmission device converts a baseband signal (a transmission signal) output by the controller 230 into a radio signal and transmits the resulting signal through the antenna.

The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of control and processing in the gNB 200. Such processing includes processing of respective layers to be described later. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via an Xn interface which is an inter-base station interface. The backhaul communicator 240 is connected to the AMP/UPF 300 via a NG interface between a base station and the core network. Note that the gNB 200 may include a Central Unit (CU) and a Distributed Unit (DU) (i.e., functions are divided), and the two units may be connected via an F1 interface, which is a fronthaul interface.

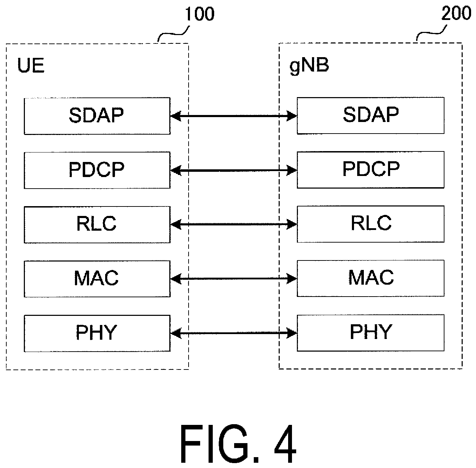

FIG. 4 is a diagram illustrating a configuration of a protocol stack of a radio interface of a user plane handling data.

A radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel. Note that the PHY layer of the UE 100 receives downlink control information (DCI) transmitted from the gNB 200 over a physical downlink control channel (PDCCH). Specifically, the UE 100 blind-decodes the PDCCH using a radio network temporary identifier (RNTI) and acquires successfully decoded DCI as DCI addressed to the UE 100. The DCI transmitted from the gNB 200 is appended with CRC parity bits scrambled by the RNTI.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

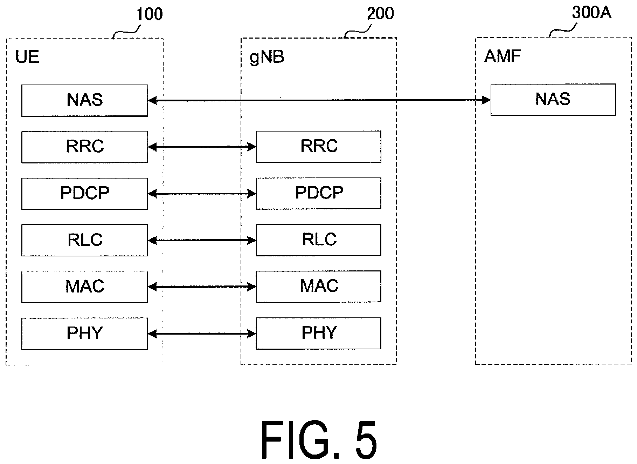

FIG. 5 is a diagram illustrating a configuration of a protocol stack of a radio interface of a control plane handling signaling (a control signal).

The protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection (RRC connection) between the RRC of the UE 100 and the RRC of the gNB 200 is present, the UE 100 is in an RRC connected state. When no connection (RRC connection) between the RRC of the UE 100 and the RRC of the gNB 200 is present, the UE 100 is in an RRC idle state. When the connection between the RRC of the UE 100 and the RRC of the gNB 200 is suspended, the UE 100 is in an RRC inactive state.

The NAS which is positioned upper than the RRC layer performs session management, mobility management, and the like. NAS signaling is transmitted between the NAS of the UE 100 and the NAS of the AMF 300A. Note that the UE 100 includes an application layer other than the protocol of the radio interface. A layer lower than the NAS is referred to as Access Stratum (AS).

### (2) Dual connectivity

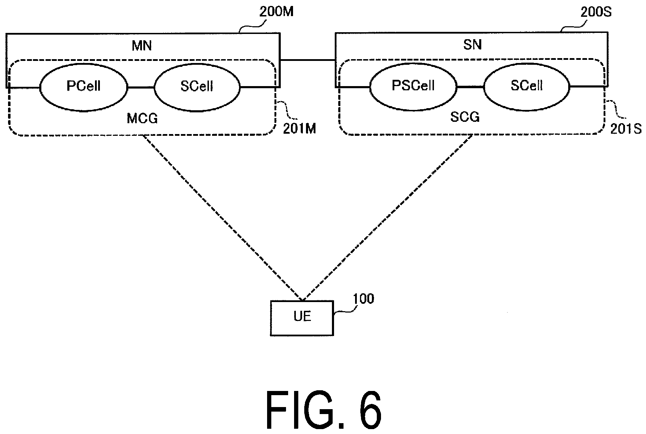

A summary of Dual Connectivity (DC) according to the embodiment will be described. FIG. 6 is a diagram for explaining the summary of DC according to the embodiment.

According to DC, the UE 100 performs simultaneous communication with a Master Cell Group (MCG) 201M managed by a Master Node (MN) 200M and a Secondary Cell Group (SCG) 201S managed by a Secondary Node (SN) 200S. The MN 200M may be an NR base station (gNB) or an LTE base station (eNB). The MN 200 is also called a master base station. The SN 200S may be an NR base station (gNB) or an LTE base station (eNB). The SN 200S is also called a secondary base station. The MN 200 and the SN 200S may be 6G base stations. Hereinafter, an example in which each of the MN 200M and the SN 200S is an NR base station (gNB) will be mainly described.

For example, through a network interface between the MN 200M and the SN 200S, the MN 200M transmits a predetermined message (e.g., SN Addition Request message) to the SN 200S, and the MN 200M transmits an RRC Reconfiguration message to the UE 100 to start DC. Radio resources are allocated to the UE 100 in the RRC connected state by the schedulers of the MN 200M and the SN 200S to perform wireless communication using the radio resources of the MN 200M and the radio resources of the SN 200S. The network interface between the MN 200M and the SN 200 may be an Xn interface (or an X2 interface). The MN 200M and the SN 200 communicate with each other via the network interface.

The MN 200M may have control plane connection with the core network. The MN 200M provides main radio resources for the UE 100. The MN 200M manages the MCG 201M. The MCG 201M is a group of serving cells associated with the MN 200M. The MCG 201M includes a Primary Cell (PCell) and optionally includes one or more Secondary Cells (SCells). The MN 200M controls and manages a configuration for the UE 100.

The SN 200S may not have control plane connection with the core network. The SN 200S provides additional radio resources to the UE 100. The SN 200S manages the SCG 201S. The SCG 201S includes a Primary-Secondary Cell (PSCell) and optionally includes one or more SCells. Note that the PCell of the MCG 201M and the PSCell of the SCG 201S are also called SPecial Cells (SPCells).

### (3) Summary of conditional reconfiguration

The summary of the conditional reconfiguration according to the embodiment will be described.

### (3.1) Conditional Handover (CHO)

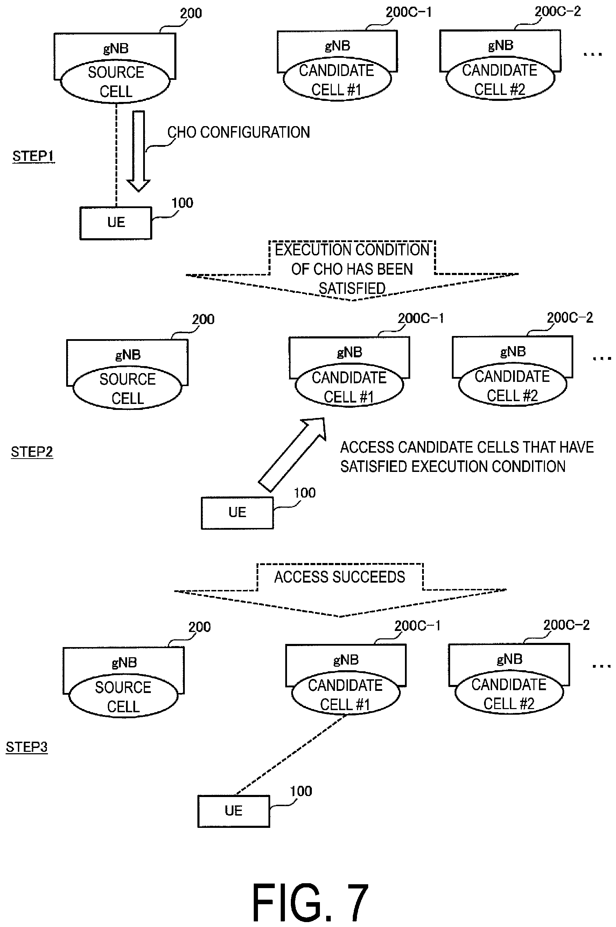

According to CHO, a handover execution condition is configured in advance to the UE 100, and handover is executed when the configured execution condition is satisfied in the UE 100. FIG. 7 is a diagram for explaining CHO according to the embodiment.

FIG. 7 illustrates an example in which a base station that manages the source cell is the gNB 200, a base station that manages a candidate cell #1 is a gNB 200C-1, and a base station that manages a candidate cell #2 is a gNB 200C-2. However, these cells may be managed by one base station. Two candidate cells (the candidate cell #1 and the candidate cell #2) are illustrated. However, the number of candidate cells may be one or may be three or more. The UE 100 is in the RRC connected state of the source cell.

In STEP 1, the gNB 200 transmits to the UE 100 the RRC Reconfiguration message including the conditional RRC reconfiguration (Conditional Reconfiguration) that is the CHO configuration. The RRC Reconfiguration message is an example of an RRC message. The CHO configuration includes, for example, the candidate cell configuration (i.e., the configuration information of each of the candidate cell #1 and the candidate cell #2) generated by candidate gNBs 200C (i.e., the gNB 200C-1 and the gNB 200C-2), and condition information indicating the execution condition generated by the source gNB 200 (i.e., gNB 200). The candidate cell configuration and the execution condition are associated with each other. Different execution conditions may be associated with a plurality of candidate cells. The execution condition is information for configuring the radio quality of a measurement target, a threshold value to be compared with the radio quality, and the like. The UE 100 starts evaluating the execution condition.

In STEP 2, in response to the execution condition configured in STEP 1 being satisfied, the UE 100 initializes access to the candidate cell (here, the candidate cell #1) that has satisfied the execution condition. From a point of time when the UE 100 starts synchronizing with the candidate cell #1, the UE 100 may not monitor the source cell.

In STEP 3, when the UE 100 successfully accesses the candidate cell #1, the UE 100 switches the connection from the source cell to the candidate cell #1. Thus, the handover is completed. The UE 100 communicates with the candidate cell #1 using the candidate cell configuration (configuration information of the candidate cell #1) received in STEP 1.

### (3.2) Conditional PSCell Change (CPC)

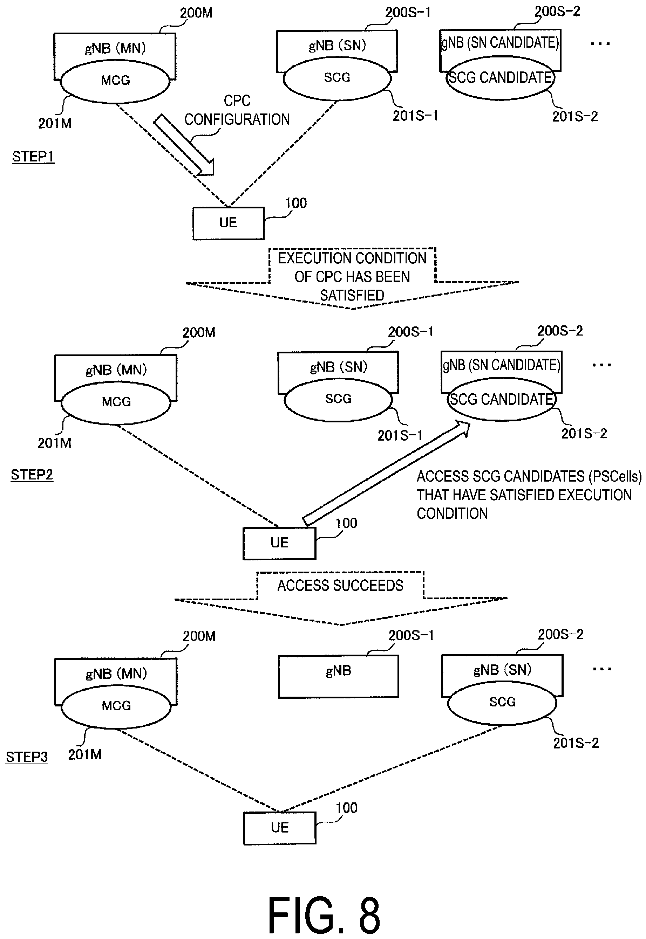

According to CPC, the execution condition of PSCell change is configured in advance to the UE 100, and the PSCell change is executed when the configured execution condition is satisfied in the UE 100. FIG. 8 is a diagram for explaining CPC according to the embodiment. It is assumed that the UE 100 has connection with the gNB 200M (MCG 201M) that is the MN and a gNB 200S-1 (SCG 201S-1) that is an SN, and performs communication of a DC scheme.

CPC includes intra-SN CPC that changes the PSCell from one cell to another cell in the one SN 200S, and inter-SN (Inter-SN) CPC that changes the PSCell from a cell of the one SN 200S to a cell of the other SN 200S. Inter-SN CPC will be mainly described below. However, the embodiment is not limited to Inter-SN CPC, and may be Intra-SN CPC.

In STEP 1, the gNB 200M that is the MN transmits to the UE 100 the RRC Reconfiguration message including Conditional Reconfiguration that is the CPC configuration. The CPC configuration includes, for example, the SCG candidate configuration generated by a gNB 200S-2 that is an SN candidate (that is, for example, the configuration information of the PSCell of an SCG candidate 201S-2 of a gNB 200-2, and may optionally include SCell configuration information), and condition information indicating the execution condition generated by the MN (i.e., gNB 200M). The SCG candidate configuration and the execution condition are associated with each other. Different execution conditions may be associated with a plurality of SCG candidate configurations. The execution condition is information for configuring the radio quality of a measurement target, a threshold value to be compared with the radio quality, and the like. The UE 100 starts evaluating the execution condition.

In STEP 2, in response to the execution condition configured in STEP 1 being satisfied, the UE 100 initializes access to the PSCell of the SCG candidate 201S-2 that has satisfied the execution condition.

In STEP 3, when the UE 100 successfully accesses the SCG candidate 201S-2 (PSCell), the UE 100 switches the PSCell from the SCG 201S-1 (gNB 200S-1) to the SCG 201S-2 (gNB 200S-2). Thus, the PSCell change is completed. The UE 100 communicates with the SCG 201S-2 using the SCG candidate configuration (configuration information of the SCG 201S-2) received in STEP 1.

### (3.3) Conditional PSCell Addition (CPA)

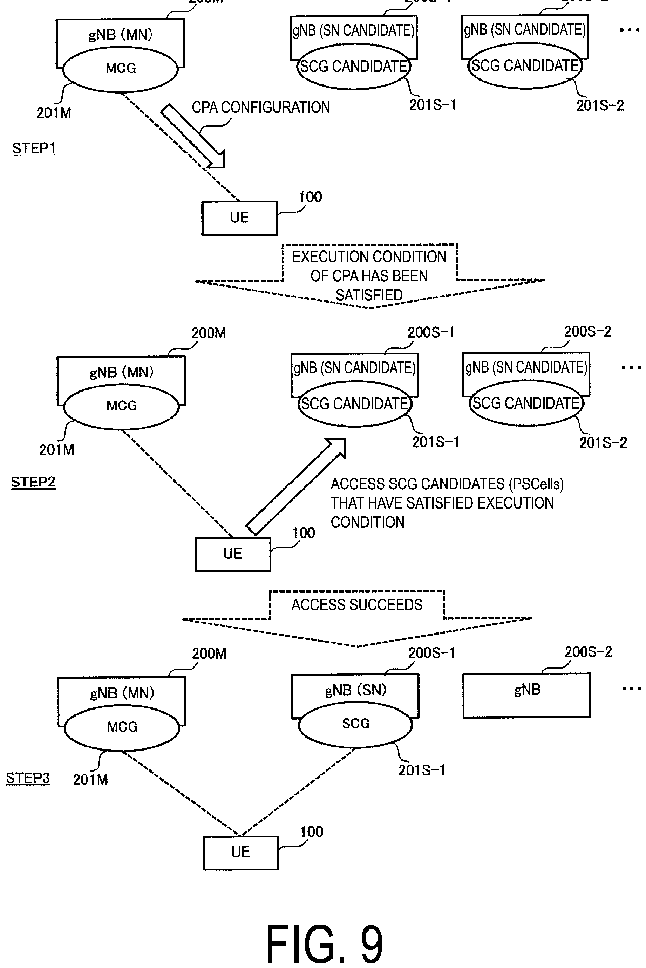

According to CPA, an execution condition of PSCell addition is configured in advance to the UE 100, and PSCell addition is executed when the configured execution condition is satisfied in the UE 100. FIG. 9 is a diagram for explaining CPA according to the embodiment. The UE 100 is in the RRC connected state in the MCG 201M.

In STEP 1, the gNB 200M that is the MN transmits to the UE 100 the RRC Reconfiguration message including Conditional Reconfiguration that is the CPA configuration. The CPA configuration includes, for example, an SCG candidate configuration generated by the SN candidates (the gNB 200S-1 and the gNB 200S-2) (e.g., configuration information of each of the SCG candidate 201S-1 and the SCG candidate 201S-2), and condition information indicating the execution condition generated by the MN (i.e., gNB 200M). The SCG candidate configuration and the execution condition are associated with each other. Different execution conditions may be associated with a plurality of SCG candidate configurations. The execution condition is information for configuring the radio quality of a measurement target, a threshold value to be compared with the radio quality, and the like. The UE 100 starts evaluating the execution condition.

In STEP 2, in response to the execution condition configured in STEP 1 being satisfied, the UE 100 initializes access to the PSCell of the SCG candidate (here, the SCG candidate 201S-1) that has satisfied the execution condition.

In STEP 3, when successfully accessing the SCG candidate 201S-1 (PSCell), the UE 100 starts communication of the DC scheme. The UE 100 communicates with the SCG 201S-1 using the SCG candidate configuration (configuration information of the SCG 201S-1) received in STEP 1.

### (4) Operation of mobile communication system

The operation of the mobile communication system 1 according to the embodiment, more specifically, an operation for simultaneously performing CHO and CPAC (CPC and CPA) will be described. According to such an operation, how the gNB 200 (MN) configures a plurality of SCG candidates to the UE 100 may become a problem. How the UE 100 determines the target SCG from the plurality of SCG candidates may become a problem.

In the embodiment, the UE 100 communicates with the MCG 201M and the SCG 201S by DC. First, the MN 200M that manages the MCG 201M transmits, to the UE 100, an RRC message (more specifically, Conditional Reconfiguration) including a target MCG configuration for performing CHO to a target MCG, and an SCG candidate configuration of each of the plurality of SCG candidates associated with the target MCG. The UE 100 receives the RRC message. Secondly, when the execution condition (also referred to as a "trigger condition") of CHO is satisfied, the UE 100 selects any SCG candidate from the plurality of SCG candidates as a target SCG. Thus, CHO and CPAC (CPC and CPA) can be simultaneously performed. When the execution condition of CHO is satisfied, the UE 100 may initialize access to the target MCG, and initialize access to the selected target SCG.

### (4.1) Operation of simultaneously performing CHO and CPC

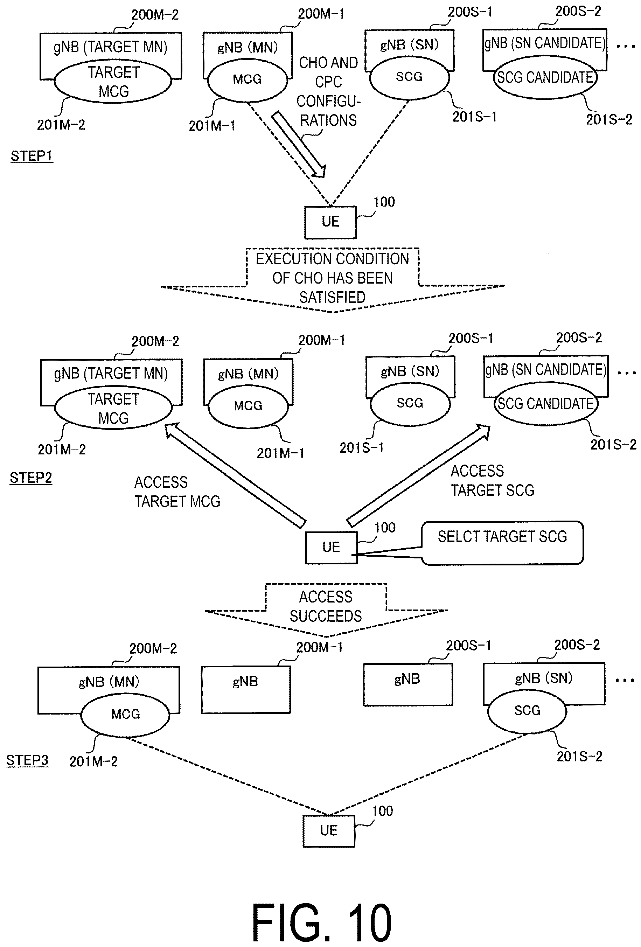

An operation of simultaneously performing CHO and CPC according to the embodiment will be described. FIG. 10 is a diagram illustrating the operation of simultaneously performing CHO and CPC according to the embodiment. It is assumed that the UE 100 has connection with the gNB 200M-1 (MCG 201M-1) that is the MN and the gNB 200S-1 (SCG 201S-1) that is the SN, and performs communication of the DC scheme. Although FIG. 10 illustrates the one SCG candidate 201S-2, it is assumed that there are a plurality of SCG candidates. Hereinafter, it is assumed for simplification of description that one MCG candidate (target MCG) is configured at a time of CHO. However, a plurality of MCG candidates may be configured during CHO. A plurality of SCG candidates may be configured for each of the plurality of MCG candidates.

In STEP 1, the gNB 200M-1 that is the MN transmits to the UE 100 the RRC Reconfiguration message including Conditional RRC Reconfiguration (Conditional Reconfiguration) that is CHO and CPC configurations. This Conditional Reconfiguration (first conditional RRC reconfiguration) includes condition information indicating an execution condition of CHO, a target MCG configuration that is configuration information of the target MCG 201M-2, and a list including an SCG candidate configuration of each of the plurality of SCG candidates. The target MCG configuration includes information that is necessary for communication with the target MCG 201M-2 (PCell). The SCG candidate configuration includes information that is necessary for communication with a corresponding SCG (PSCell). Details of the configuration of Conditional Reconfiguration will be described later.

In STEP 2, in response to the execution condition of CHO configured in STEP 1 being satisfied, the UE 100 selects a target SCG from the plurality of SCG candidates configured in STEP 1 . Details of target SCG selection processing will be described later. The UE 100 initializes access to the target MCG 201M-2 (PCell), and also initializes access to the PSCell of the selected target SCG (here, the SCG candidate 201S-2). For example, the UE 100 may initialize access to the target SCG 201S-2 (PSCell) after successfully accessing the target MCG 201M-2 (PCell).

In STEP 3, when successfully accessing the target MCG 201M-2 (PCell), the UE 100 switches the PCell (MN) from the MCG 201M-1 (gNB 200M-1) to the MCG 201M-2 (gNB 200M-2). When successfully accessing the target SCG 201S-2 (PSCell), the UE 100 switches the PSCell (SN) from the SCG 201S-1 (gNB 200S-1) to the SCG201S-2 (gNB 200S-2). Thus, CHO and CPC are completed. The UE 100 communicates with the MCG 201M-2 (PCell) using the target MCG configuration received in STEP 1. The UE 100 communicates with the SCG 201S-2 (PSCell) using the SCG configuration of the target SCG among the plurality of candidate SCG configurations received in STEP 1.

### (4.2) Operation of simultaneously performing CHO and CPA

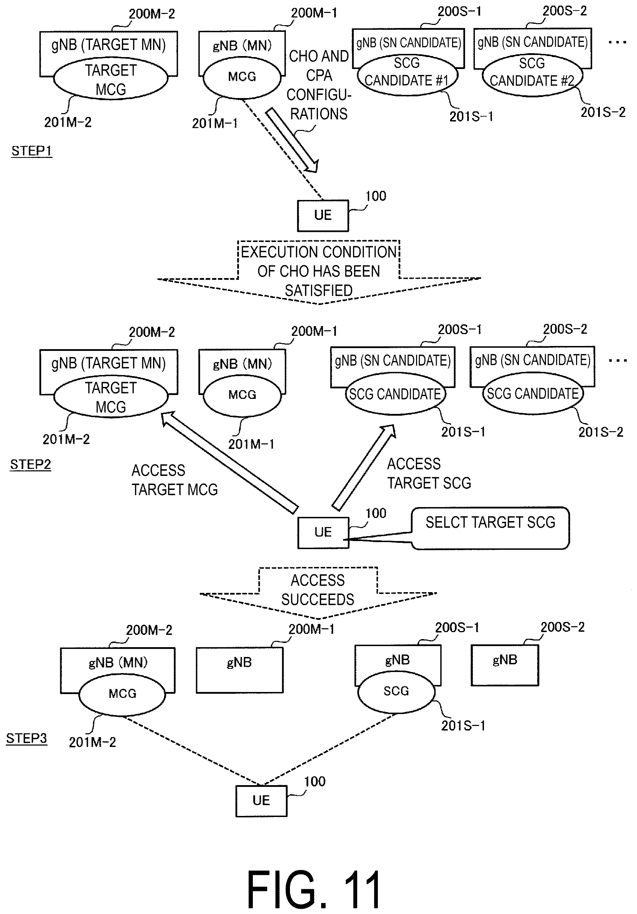

An operation of simultaneously performing CHO and CPA according to the embodiment will be described. FIG. 11 is a diagram for explaining the operation of simultaneously performing CHO and CPA according to the embodiment. The UE 100 has connection with the gNB 200M-1 (MCG 201M-1) that is the MN.

In STEP 1, the gNB 200M-1 that is the MN transmits to the UE 100 the RRC Reconfiguration message including Conditional RRC Reconfiguration (Conditional Reconfiguration) that is CHO and CPA configurations. This Conditional Reconfiguration (first conditional RRC reconfiguration) includes condition information indicating an execution condition of CHO, a target MCG configuration that is configuration information of the target MCG 201M-2, and a list including an SCG candidate configuration of each of the plurality of SCG candidates. The target MCG configuration includes information that is necessary for communication with the target MCG 201M-2 (PCell). The SCG candidate configuration includes information that is necessary for communication with a corresponding SCG (PSCell). Details of the configuration of Conditional Reconfiguration will be described later.

In STEP 2, in response to the execution condition of CHO configured in STEP 1 being satisfied, the UE 100 selects a target SCG from the plurality of SCG candidates configured in STEP 1 . Details of target SCG selection processing will be described below. The UE 100 initializes access to the target MCG 201M-2 (PCell), and initializes access to the PSCell of the selected target SCG (here, the SCG candidate 201S-1). For example, the UE 100 may initialize access to the target SCG 201S-1 (PSCell) after successfully accessing the target MCG 201M-2 (PCell).

In STEP 3, when successfully accessing the target MCG 201M-2 (PCell), the UE 100 switches the PCell (MN) from the MCG 201M-1 (gNB 200M-1) to the MCG 201M-2 (gNB 200M-2). When the UE 100 successfully accesses the target SCG 201S-2 (PSCell), the PSCell (SN) is added to the SCG 201S-1 (gNB 200S-1). Thus, CHO and CPA are completed. The UE 100 communicates with the MCG 201M-2 (PCell) using the target MCG configuration received in STEP 1. The UE 100 communicates with the SCG 201S-1 (PSCell) using the SCG configuration of the target SCG among the plurality of candidate SCG configurations received in STEP 1.

### (4.3) Message configuration example

A configuration example of an RRC message according to the embodiment, more specifically, Conditional Reconfiguration (first conditional RRC reconfiguration) will be described. As described above, Conditional Reconfiguration in the RRC message according to the embodiment is transmitted from the gNB 200 (MN) to the UE 100. This Conditional Reconfiguration includes a target MCG configuration for performing CHO to the target MCG, and an SCG candidate configuration of each of a plurality of SCG candidates associated with the target MCG. That is, this Conditional Reconfiguration includes the MCG configuration for performing the conditional reconfiguration, and the plurality of SCG candidate configurations associated with the MCG configuration.

### (4.3.1) Message configuration example 1

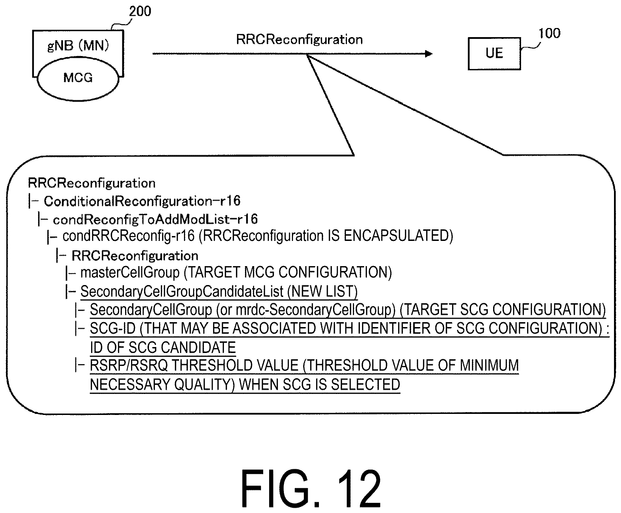

FIG. 12 is a diagram illustrating configuration example 1 of an RRC message according to the embodiment. The gNB 200 (MN) transmits, to the UE 100, an RRC message (RRC Reconfiguration message) for simultaneously performing CHO and CPAC (CPC and CPA). The RRC Reconfiguration message includes Conditional Reconfiguration-r16 as an information component. Here, "-r16" means an information element introduced by 3GPP Release 16.

Conditional Reconfiguration-r16 includes condReconfigToAddModList-r16 that is a list of conditional reconfigurations to be added or modified for the MCG (MN). Each entry of condReconfigToAddModList-r16 (CondReconfigToAddMod-r16) corresponds to a first conditional RRC reconfiguration. CondReconfigToAddMod-r16 includes condRRCReconfig-r16, and RRCReconfiguration that needs to be applied when the execution condition is satisfied is encapsulated for condRRCReconfig-r16. CondReconfigToAddMod-r16 further includes condExecutionCond-r16 (not illustrated) that is condition information indicating an execution condition that needs to be satisfied to trigger execution of the corresponding conditional reconfiguration.

CondRRCReconfig-r16 (RRCReconfiguration) includes masterCellGroup that is the target MCG configuration. In this configuration example 1, condRRCReconfig-r16 (RRCReconfiguration) further includes secondaryCellGroupCandidateList that is a new list including information of each SCG candidate (target SCG).

Each entry of the list (secondaryCellGroupCandidateList) includes secondaryCellGroup (or mrdc-SecondaryCellGroup) that is configuration information of an SCG candidate (target SCG). Each entry of the list (secondaryCellGroupCandidateList) may further include at least one of an SCG identifier (SCG-ID) or a radio quality threshold value. The SCG identifier (SCG-ID) is an identifier for identifying the SCG. The radio quality threshold value is Reference Signal Received Power (RSRP) and/or Reference Signal Received Quality (RSRQ) at the time of selection of the SCG, more specifically, a threshold value of minimum necessary quality for the SCG for selecting the SCG.

According to this configuration example 1, the plurality of SCG candidates can be appropriately configured to the UE 100.

### (4.3.2.) Message configuration example 2

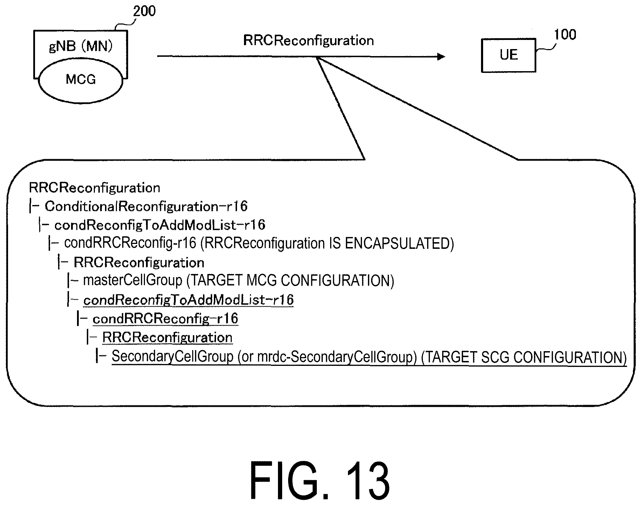

FIG. 13 is a diagram illustrating configuration example 2 of an RRC message according to the embodiment. The gNB 200 (MN) transmits, to the UE 100, an RRC message (RRC Reconfiguration message) for simultaneously performing CHO and CPAC (CPC and CPA). The RRC Reconfiguration message includes Conditional Reconfiguration-r16 as an information component.

Conditional Reconfiguration-r16 includes condReconfigToAddModList-r16 that is a list of conditional reconfigurations to be added or modified for the MCG (MN). Each entry of condReconfigToAddModList-r16 (CondReconfigToAddMod-r16) corresponds to the first conditional RRC reconfiguration. CondReconfigToAddMod-r16 includes condRRCReconfig r16, and RRCReconfiguration that needs to be applied when the execution condition is satisfied is encapsulated for condRRCReconfig r16. CondReconfigToAddMod-r16 further includes condExecutionCond-r16 (not illustrated) that is condition information indicating an execution condition that needs to be satisfied to trigger execution of the corresponding conditional reconfiguration.

CondRRCReconfig-r16 (RRCReconfiguration) includes masterCellGroup that is the target MCG configuration. In this configuration example 2, condRRCReconfig-r16 (RRCReconfiguration) includes condReconfigToAddModList-r16 that is a list of conditional reconfigurations to be added or modified for the SCG (SN). Each entry of condReconfigToAddModList-r16 (CondReconfigToAddMod-r16) corresponds to a second conditional RRC reconfiguration. CondReconfigToAddMod-r16 includes condRRCReconfig-r16, RRCReconfiguration that needs to be applied when the execution condition is satisfied is encapsulated for condRRCReconfig-r16, and this RRCReconfiguration includes an SCG candidate configuration (secondaryCellGroup or mrdc SecondaryCellGroup) that is configuration information of the SCG candidate (target SCG). CondReconfigToAddMod-r16 further includes condExecutionCond-r16 (not illustrated) that is condition information indicating an execution condition that needs to be satisfied to trigger execution of the corresponding conditional reconfiguration.

As described above, in this configuration example 2, the second conditional RRC reconfiguration provided for each of the plurality of SCG candidates includes the condition information (condExecutionCond-r16) indicating the execution condition for the corresponding SCG candidate, and the SCG candidate configuration (secondaryCellGroup or mrdc SecondaryCellGroup) for the corresponding SCG candidate.

According to this configuration example 2, the plurality of SCG candidates can be appropriately configured to the UE 100. According to this configuration example 2, the execution condition can be configured to the UE 100 per SCG candidate.

### (4.4) Example of operation flow

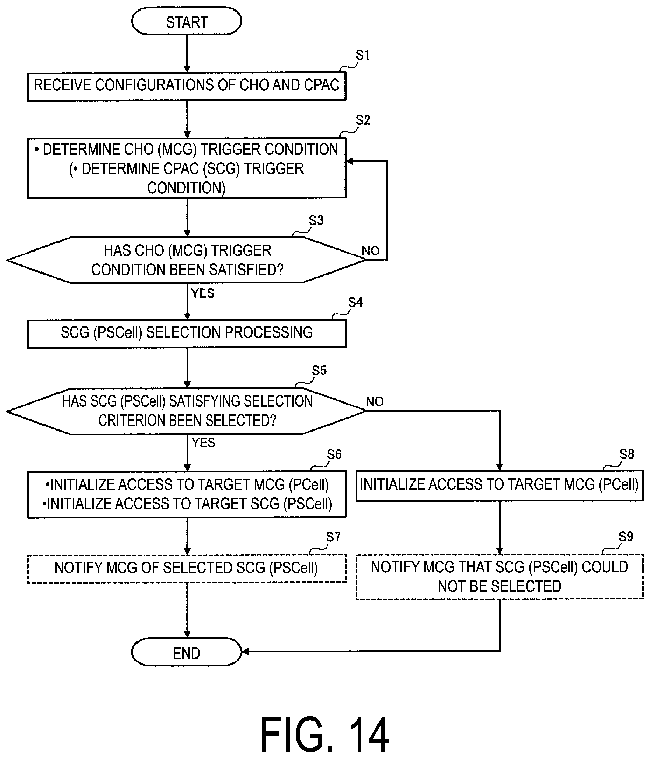

An example of an operation flow of the UE 100 according to the embodiment will be described. FIG. 14 is a diagram illustrating the example of the operation flow of the UE 100 according to the embodiment.

In step S1, the UE 100 receives from the gNB 200 an RRC message (RRC Reconfiguration message) for simultaneously performing CHO and CPAC (CPC and CPA). The RRC message has the configuration of above-described message configuration example 1 or message configuration example 2.

In step S2, the UE 100 performs radio quality measurement, and determines whether or not the execution condition (i.e., the execution condition of CHO) configured to the target MCG condition has been satisfied. This execution condition of CHO may be condEventA3 or condEventA5 defined by the technical specifications of 3GPP. In a case of above-described message configuration example 1, the UE 100 may determine for each SCG candidate whether or not the corresponding radio quality threshold value has been satisfied. In the case of above-described message configuration example 2, the UE 100 may determine for each configured SCG candidate whether or not the corresponding execution condition (i.e., the execution condition of CPAC) has been satisfied. This execution condition of CPAC may be condEventA3, condEventA4, condEventA5, or the like defined by the technical specifications of 3GPP. Note that, even when the SCG candidate satisfies the execution condition, the UE 100 does not make (withholds) an access to the SCG candidate at this point of time.

When determining that the execution condition (the execution condition of CHO) configured for the MCG 201M has been satisfied (step S3: YES), the UE 100 selects a target SCG (PSCell) from the plurality of configured SCG candidates in step S4. Details of this selection processing will be described in detail later. Note that the UE 100 may fail to select a target SCG (PSCell) when there is no SCG candidate that satisfies the predetermined selection criterion. That is, the UE 100 does not select the target SCG.

When the SCG candidate satisfying the predetermined selection criterion is selected as the target SCG (step S5: YES), the UE 100 initializes access to the target MCG (PCell) in step S6. The UE 100 also starts accessing the selected target SCG. Here, the description is given below under assumption that such an access has succeeded.

In step S7, the UE 100 may transmit to the target MCG an identifier related to the SCG candidate selected as the target SCG in step S4. Here, the UE 100 may transmit the identifier to the target MCG when the access to the target SCG succeeds. The UE 100 may transmit the identifier to the target MCG regardless of whether or not the access to the target SCG has succeeded. Thus, the target MCG (new MN) can grasp whether or not the UE 100 has selected the target SCG. Note that the UE 100 may transmit to the target MCG an RRC Reconfiguration message including the identifier. The identifier may be at least one selected from the group consisting of a Cell ID of the PSCell of the selected target SCG, an identifier (condReconfigId-r16) of the SCG candidate configuration of the selected target SCG, and an ID (SCG-ID) of the SCG candidate in above-described message configuration example 1. The UE 100 may apply the SCG configuration and discard the SCG configuration other than the SCG in response to the access to the target MCG having succeeded and/or the access to the target SCG having succeeded.

On the other hand, when the SCG candidate satisfying the predetermined selection criterion cannot be selected as the target SCG (step S5: NO), the UE 100 initializes access to the target MCG (PCell) in step S8. Here, the description is given below under assumption that such an access has succeeded. In step S9, the UE 100 may transmit, to the target MCG, information indicating that the SCG has not been selected. That is, the UE 100 may transmit, without selecting the target SCG, information indicating that the target SCG cannot be selected to the target MCG in accordance with the SCG candidate that satisfies the selection criterion not existing. Thus, the target MCG (new MN) can grasp that the UE 100 has not been able to select the target SCG. Note that the UE 100 may transmit to the target MCG an RRC Reconfiguration Complete message including the information. The UE 100 may discard the SCG configuration in response to the access to the target MCG having succeeded and/or in response to the target SCG not being selected. Alternatively, the UE 100 may continue radio measurement of the SCG and determination of the trigger condition in accordance with the SCG configuration without discarding the SCG configuration. That is, the UE 100 behaves (falls back to CPAC) similarly to the case where the CPAC configuration has been made. The UE 100 may select whether to discard the SCG configuration in accordance with the configuration from the gNB 200 or to continue the radio measurement of the SCG and determination of the trigger condition in accordance with the SCG configuration without discarding the SCG configuration.

In this operation flow, an example has been described in which the identifier related to the SCG candidate selected as the target SCG is transmitted from the UE 100 to the target MCG. However, the target SCG (SN) accessed from the UE 100 may notify the target MCG (new MN) of the access (and the identifier).

### (4.5) SCG selection processing

Details of the SCG selection processing according to the embodiment, that is, step S4 in FIG. 14 will be described. The UE 100 performs the SCG selection processing in accordance with at least one of the following options.

### (4.5.1) Option 1

According to option 1 of the SCG selection processing, the UE 100 selects the target SCG from a plurality of configured SCG candidates in accordance with a selection criterion for selecting the plurality of configured SCG candidates in descending order of radio quality. Thus, the UE 100 can select an appropriate target SCG.

When an execution condition (i.e., an execution condition of CPAC) is configured for each of the plurality of SCG candidates, the UE 100 may select, as the target SCG, an SCG candidate having the best radio quality among the SCG candidates that have satisfied the execution condition.

For example, first, the UE 100 extracts an SCG (PSCell) that satisfies the execution condition from a plurality of configured SCG candidates (a plurality of PSCell candidates). Alternatively, the UE 100 may extract an SCG (PSCell) that satisfies the minimum necessary radio quality threshold value from a plurality of configured SCG candidates (a plurality of PSCell candidates). Second, the UE 100 selects the SCG (PSCell) having the best radio quality from the extracted SCGs (PSCells). Note that the radio quality may be the RSRP and/or the RSRQ measured by the UE 100. Alternatively, the UE 100 may firstly extract an SCG having the best radio quality among the plurality of SCG candidates (the plurality of PSCell candidates), and secondly select the SCG (PSCell) when the extracted SCG satisfies the execution condition.

### (4.5.2) Option 2

According to option 2 of the SCG selection processing, the UE 100 selects a target SCG from a plurality of configured SCG candidates in accordance with a selection criterion for selecting the plurality of configured SCG candidates in descending order of priority designated by the gNB 200 (MN). Thus, the UE 100 can select an appropriate target SCG in accordance with an initiative of the network.

When the execution condition (i.e., the execution condition of CPAC) is configured for each of the plurality of SCG candidates, the UE 100 may select as the target SCG 201 S the SCG candidate having the highest priority among the SCG candidates that have satisfied the execution condition. Alternatively, when the minimum necessary radio quality threshold value is configured for each of the plurality of SCG candidates, the UE 100 may select as the target SCG 201S the SCG candidate having the highest priority among the SCG candidates that have satisfied the radio quality threshold values.

According to this option 2, the gNB 200 configures the plurality of SCG candidates to the UE 100 in order desired by the gNB 200. For example, the priority may be higher in order of entries in a list in which the plurality of SCG candidates are configured. More specifically, the first entry in the list is the highest priority. Alternatively, the priority may be higher in order of IDs (SCG-IDs) of the above-described SCG candidates. Alternatively, the gNB 200 may assign an IE indicating the priority so as to explicitly designate the priority to (the list of) the SCG candidate configurations.

The UE 100 checks whether or not the SCG (PSCell) having the highest priority designated by the gNB 200 satisfies the execution condition (or the radio quality threshold value). The UE 100 selects the SCG (PSCell) when the execution condition is satisfied, and checks for an SCG of the second highest priority whether or not the execution condition (or the radio quality threshold value) is satisfied when the execution condition is not satisfied. Note that, when there are a plurality of SCGs (PSCells) having the highest priority, the UE 100 may select an SCG (PSCell) having better radio quality.

### (4.5.3) Option 3

Option 3 of the SCG selection processing is an option that assumes CPC. According to this option 3, the UE 100 selects the target SCG 201S from a plurality of configured SCG candidates in accordance with a selection criterion for preferentially selecting the SCG 201S that the UE 100 is currently communicating with. Thus, the UE 100 can efficiently select the target SCG.

When, for example, an SCG (PSCell) that the UE 100 is currently communicating with (the SCG that is in use or is configured) exists among a plurality of configured SCG candidates (a plurality of PSCell candidates), the UE 100 temporarily selects the SCG (PSCell). When the temporarily selected SCG (PSCell) satisfies the execution condition (or the radio quality threshold value), the UE 100 selects the SCG (PSCell). When the temporarily selected SCG does not satisfy the execution condition (or the radio quality threshold value), or when an SCG that the UE 100 is currently communicating with is not a candidate, the UE 100 executes above option 1 or 2.

### (4.5.4) Option 4

Option 4 of the SCG selection processing is an exceptional operation in a case where the UE 100 cannot select an SCG. When an SCG cannot be selected as a result of applying above options 1 to 3 (when none of SCG candidate configurations satisfies the execution condition (or the radio quality threshold value)), the UE 100 does not select any SCG.

### (4.5.5) Option 5

According to option 5 of the SCG selection processing, the UE 100 selects the target SCG 201S from a plurality of configured SCG candidates in accordance with a selection criterion for selecting an SCG whose radio quality satisfies a minimum quality criterion. For example, the UE 100 may select the SCG having the best radio quality from the SCGs satisfying the minimum quality threshold value using above-described option 1 in combination. The UE 100 may include only SCGs satisfying the minimum quality threshold values as selection targets.

### (5) Other Embodiment

The above-described embodiment has described DC where the UE 100 communicates with the MCG and the SCG. However, the embodiment may be applied to Multi-Connectivity (MC) where the UE 100 communicates with the MCG and a plurality of SCGs. In this case, the UE 100 may select a plurality of SCGs in above-described (4.5) SCG selection processing. When, for example, two SCGs are selected, an SCG having the best radio quality and an SCG having the second best radio quality may be selected. An SCG having the highest priority and an SCG having the second highest priority may be selected. The gNB 200 may configure the number of SCGs that need to be selected (that may be a selectable number or a selection permitted number) for the UE 100. The UE 100 may specify the number of SCGs to be selected in accordance with a configuration of the gNB 200. The configuration may be performed only in a case of MC. That is, in the case of DC, the configuration may not be performed. The UE 100 accesses a selected SCG similarly to the above-described embodiment. Note that, even when the number of selected SCGs does not reach the number of SCGs that need to be selected, the UE 100 may access the selected SCG. Even when, for example, the number of SCGs that need to be selected is configured to two and the number of selected SCGs is one, access to the selected SCG is executed.

The operation flows described above can be separately and independently implemented, and also be implemented in combination of two or more of the operation flows. For example, some steps of one operation flow may be added to another operation flow or some steps of one operation flow may be replaced with some steps of another operation flow.

The above-described embodiment has described an example in which the base station is an NR base station (i.e., a gNB). However, the base station may be an LTE base station (i.e., an eNB) or a 6G base station. The base station may be a relay node such as an Integrated Access and Backhaul (IAB) node. The base station may be a DU of the IAB node. The user equipment may be a Mobile Termination (MT) of the IAB node.

A program causing a computer to execute each of the processing performed by the UE 100 or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM. Circuits for executing processing performed by the UE 100 or the gNB 200 may be integrated, and at least a part of the UE 100 or the gNB 200 may be implemented as a semiconductor integrated circuit (chipset, system on a chip (SoC)).

The phrases "based on" and "depending on" used in the present disclosure do not mean "based only on" and "only depending on," unless specifically stated otherwise. The phrase "based on" means both "based only on" and "based at least in part on". The phrase "depending on" means both "only depending on" and "at least partially depending on". The terms "include", "comprise" and variations thereof do not mean "include only items stated" but instead mean "may include only items stated" or "may include not only the items stated but also other items." The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variations can be made without departing from the gist of the present disclosure.

This application claims priority to US Provisional Patent Application No. 63/307248 (filed on February 7, 2022), the contents of which are incorporated herein by reference in their entirety.

### Supplementary Note

Features relating to the embodiments described above are described below as supplements.
(1)
   A communication method for communicating, by a user equipment, with a Master Cell Group (MCG) and a Secondary Cell Group (SCG), the communication method including the steps of: transmitting, by a master node managing the Master Cell Group (MCG), a Radio Resource Control (RRC) message to the user equipment, the radio resource control message including a target MCG configuration for performing Conditional Handover (CHO) to a target MCG and an SCG candidate configuration of each of a plurality of SCG candidates associated with the target MCG; receiving, by the user equipment, the RRC message; and selecting, by the user equipment, any SCG candidate from the plurality of SCG candidates as a target SCG when an execution condition of the CHO is satisfied.
(2)
   The communication method described in above (1) further includes initializing access to the target MCG and initializing access to the selected target SCG when the execution condition is satisfied.
(3)
   According to the communication method described in above (1) or (2), the RRC message includes a first conditional RRC reconfiguration, and the first conditional RRC reconfiguration includes: condition information indicating the execution condition; the target MCG configuration; and a list including the SCG candidate configuration of each of the plurality of SCG candidates.
(4)
   According to the communication method described in any one of above (1) to (3), the list further includes at least one of an SCG identifier or a radio quality threshold value for each of the plurality of SCG candidates.
(5)
   According to the communication method described in any one of above (1) to (4), the list includes a second conditional RRC reconfiguration of each of the plurality of SCG candidates, and the second conditional RRC reconfiguration includes: condition information indicating an execution condition of a corresponding SCG candidate; and the SCG candidate configuration of the corresponding SCG candidate.
(6)
   According to the communication method described in any one of above (1) to (5), the selecting includes selecting the target SCG from the plurality of SCG candidates in accordance with a selection criterion for selecting the plurality of SCG candidates in descending order of radio quality.
(7)
   According to the communication method described in any one of above (1) to (6), the selecting includes, when an execution condition is configured for each of the plurality of SCG candidates, selecting as the target SCG an SCG candidate having the best radio quality among SCG candidates that have satisfied the execution condition.
(8)
   According to the communication method described in any one of above (1) to (7), the selecting includes selecting the target SCG from the plurality of SCG candidates in accordance with a selection criterion for selecting the plurality of SCG candidates in descending order of priority designated by the master node.
(9)
   According to the communication method described in any one of above (1) to (8), the selecting includes, when an execution condition is configured for each of the plurality of SCG candidates, selecting as the target SCG an SCG candidate having the highest priority among SCG candidates that have satisfied the execution condition.
(10)
   According to the communication method described in any one of above (1) to (9), the selecting includes selecting the target SCG from the plurality of SCG candidates in accordance with a selection criterion for preferentially selecting an SCG that the user equipment is currently communicating with.
(11)
   According to the communication method described in any one of above (1) to (10), the selecting includes selecting the target SCG from the plurality of SCG candidates in accordance with a selection criterion for selecting an SCG whose radio quality satisfies a minimum quality criterion.
(12)
   The communication method described in any one of above (1) to (11) further includes transmitting, by the user equipment to the target MCG, an identifier related to the SCG candidate selected as the target SCG.
(13)
   The communication method described in any one of above (6) to (11) further includes transmitting, by the user equipment without selecting the target SCG, information indicating that the target SCG cannot be selected to the target MCG in accordance with the SCG candidate that satisfies the selection criterion not existing.
(14)
   A user equipment for communicating with a Master Cell Group (MCG) and a Secondary Cell Group (SCG) includes: a receiver configured to receive, from a master node managing the Master Cell Group (MCG), a Radio Resource Control (RRC) message including a target MCG configuration for performing Conditional Handover (CHO) to a target MCG and an SCG candidate configuration of each of a plurality of SCG candidates associated with the target MCG; and a controller configured to select any SCG candidate from the plurality of SCG candidates as a target SCG when an execution condition of the CHO is satisfied.
(15)
   A base station for operating as a master node managing a Master Cell Group (MCG) used by a user equipment includes: a transmitter configured to transmit a Radio Resource Control (RRC) message to the user equipment, the radio resource control message including a target MCG configuration for performing Conditional Handover (CHO) to a target MCG and an SCG candidate configuration of each of a plurality of SCG candidates associated with the target MCG.

### REFERENCE SIGNS

1: Mobile communication system
100: UE
110: Receiver
120: Transmitter
130: Controller
200: gNB
200M: MN
200S: SN
201M: MCG
201S: SCG
210: Transmitter
220: Receiver
230: Controller
240: Backhaul communicator

## Claims

1. A communication method for communicating, by a user equipment, with a Master Cell Group (MCG) and a Secondary Cell Group (SCG), the communication method comprising the steps of:
transmitting, by a master node managing a Master Cell Group (MCG), a Radio Resource Control (RRC) message to a user equipment, the radio resource control message comprising a target MCG configuration for performing Conditional Handover (CHO) to a target MCG and an SCG candidate configuration of each of a plurality of SCG candidates associated with the target MCG;
receiving, by the user equipment, the RRC message; and
selecting, by the user equipment, any SCG candidate from the plurality of SCG candidates as a target SCG when an execution condition of the CHO is satisfied.

2. The communication method according to claim 1, further comprising initializing access to the target MCG and initializing access to the selected target SCG, when the execution condition is satisfied.

3. The communication method according to claim 1, wherein
the RRC message comprises a first conditional RRC reconfiguration, and
the first conditional RRC reconfiguration comprises:
condition information indicating the execution condition;
the target MCG configuration; and
a list comprising the SCG candidate configuration of each of the plurality of SCG candidates.

4. The communication method according to claim 3, wherein the list further comprises at least one of an SCG identifier or a radio quality threshold value for each of the plurality of SCG candidates.

5. The communication method according to claim 3, wherein
the list comprises a second conditional RRC reconfiguration of each of the plurality of SCG candidates, and
the second conditional RRC reconfiguration comprises:
condition information indicating an execution condition of a corresponding SCG candidate; and
the SCG candidate configuration of the corresponding SCG candidate.

6. The communication method according to claim 1, wherein the selecting comprises selecting the target SCG from the plurality of SCG candidates in accordance with a selection criterion for selecting the plurality of SCG candidates in descending order of radio quality.

7. The communication method according to claim 6, wherein the selecting comprises, when an execution condition is configured for each of the plurality of SCG candidates, selecting as the target SCG an SCG candidate having the best radio quality among SCG candidates that have satisfied the execution condition.

8. The communication method according to claim 1, wherein the selecting comprises selecting the target SCG from the plurality of SCG candidates in accordance with a selection criterion for selecting the plurality of SCG candidates in descending order of priority designated by the master node.

9. The communication method according to claim 8, wherein the selecting comprises, when an execution condition is configured for each of the plurality of SCG candidates, selecting as the target SCG an SCG candidate having the highest priority among SCG candidates that have satisfied the execution condition.

10. The communication method according to claim 1, wherein the selecting comprises selecting the target SCG from the plurality of SCG candidates in accordance with a selection criterion for preferentially selecting an SCG that the user equipment is currently communicating with.

11. The communication method according to claim 1, wherein the selecting comprises selecting the target SCG from the plurality of SCG candidates in accordance with a selection criterion for selecting an SCG whose radio quality satisfies a minimum quality criterion.

12. The communication method according to any one of claims 1 to 11, further comprising transmitting, by the user equipment to the target MCG, an identifier related to the SCG candidate selected as the target SCG.

13. The communication method according to any one of claims 6 to 11, further comprising transmitting, by the user equipment without selecting the target SCG, information indicating that the target SCG cannot be selected to the target MCG, in accordance with the SCG candidate that satisfies the selection criterion not existing.

14. A user equipment for communicating with a Master Cell Group (MCG) and a Secondary Cell Group (SCG), the user equipment comprising:
a receiver configured to receive, from a master node managing a Master Cell Group (MCG), a Radio Resource Control (RRC) message comprising a target MCG configuration for performing Conditional Handover (CHO) to a target MCG and an SCG candidate configuration of each of a plurality of SCG candidates associated with the target MCG; and
a controller configured to select any SCG candidate from the plurality of SCG candidates as a target SCG when an execution condition of the CHO is satisfied.

15. A base station for operating as a master node managing a Master Cell Group (MCG) used by a user equipment, the base station comprising:
a transmitter configured to transmit a Radio Resource Control (RRC) message to a user equipment, the radio resource control message comprising a target MCG configuration for performing Conditional Handover (CHO) to a target MCG and an SCG candidate configuration of each of a plurality of SCG candidates associated with the target MCG.
